# EUROPEAN PATENT APPLICATION

(11) **EP 0 713 889 A2**
(43) Date of publication of application: **29.05.1996**
(21) Application number: 95308395.3
(22) Date of filing: 22.11.1995
(51) Int. Cl.: C08F 210/16, C08L 23/04, C08F 2/34, C08F 2/00

(54) **In situ polyethylene blend**

(30) Priority: 23.11.1994 US 344050
(71) Applicant: UNION CARBIDE CHEMICALS & PLASTICS TECHNOLOGY CORPORATION, Danbury, Connecticut 06817-0001 (US)
(72) Inventor: Ramamurthy, Arakalgud Venkatapathia, East Windsor, New Jersey 08805 (US); Wagner, Burkhard Eric, Highland Park, New Jersey 08904 (US); Scarola, Leonard Sebastian, Union, New Jersey 09083 (US)
(74) Representative: Allard, Susan Joyce

(57) **Abstract**

An in situ blend formed in the gas phase in two or more reactors connected in series comprising a mixture of two types of particles of polyethylene, (i) one type of particle containing a major proportion of high molecular weight polyethylene and a minor proportion of low molecular weight polyethylene and having a relatively high split ratio and (ii) one type of particle containing a major proportion of low molecular weight polyethylene and a minor proportion of high molecular weight polyethylene and having a relatively low split ratio wherein the average particle size of the blend is at least about 300 microns; the average split ratio of the blend is in the range of about 40:60 to about 60:40; and no more than about 10 percent by weight of the particles in the blend have a split ratio below 90 percent of the average split ratio of the blend.

## Description

### Technical Field

This invention relates to an in situ polyethylene blend, which can be converted into film having a small number or essentially no gels (or fish-eyes).

### Background Information

Polyethylenes of various densities have been prepared and converted into film characterized by excellent tensile strength, high ultimate elongation, good impact strength, and excellent puncture resistance. These properties together with toughness are enhanced when the polyethylene is of high molecular weight. However, as the molecular weight of the polyethylene increases, the processability of the resin usually decreases. By providing a blend of polymers of high molecular weight and low molecular weight, the properties characteristic of high molecular weight resins can be retained and processability, particularly extrudability (a characteristic of the lower molecular weight component) can be improved.

The blending of these polymers is successfully achieved in a staged reactor process similar to those described in United States patents 5,047,468 and 5,149,738. Briefly, the process is one for the in situ blending of polymers wherein a high molecular weight ethylene copolymer is prepared in one reactor and a low molecular weight ethylene copolymer is prepared in another reactor. The process typically comprises continuously contacting, under polymerization conditions, a mixture of ethylene and one or more alpha-olefins with a catalyst system in two gas phase, fluidized bed reactors connected in series, said catalyst system comprising: (i) a supported magnesium/titanium based catalyst precursor; (ii) one or more aluminum containing activator compounds; and (iii) a hydrocarbyl aluminum cocatalyst, the polymerization conditions being such that an ethylene copolymer having a melt index in the range of about 0.1 to about 1000 grams per 10 minutes is formed in the high melt index (low molecular weight) reactor and an ethylene copolymer having a melt index in the range of about 0.001 to about 1 gram per 10 minutes is formed in the low melt index (high molecular weight) reactor, each copolymer having a density of about 0.860 to about 0.965 gram per cubic centimeter and a melt flow ratio in the range of about 22 to about 70, with the provisos that:
(a) the mixture of ethylene copolymer matrix and active catalyst precursor formed in the first reactor in the series is transferred to the second reactor in the series; and
(b) no additional catalyst is introduced into the second reactor.

While the in situ blends prepared as above and the films produced therefrom are found to have the advantageous characteristics heretofore mentioned, the commercial application of these granular bimodal polymers for high clarity film applications is frequently limited by the level of gels obtained. Particle size distribution and flow characteristics studies indicate that the gas phase resins having an average particle size (APS) of about 400 to about 600 microns exhibit significant compositional, molecular, and rheological heterogeneities. When such a granular resin is compounded, for example, with a conventional twin screw mixer in a single pass, and the resulting pellets are fabricated into film, the film exhibits a high level of gels ranging in size from less than about 100 microns to greater than about 500 microns. These gels adversely effect the aesthetic appearance of the product. The gel characteristics of a film product are usually designated by a subjective scale of Film Appearance Rating (FAR) varying from minus 50 (very poor; these films have a large number of large gels) to plus 50/plus 60 (very good; these films have a small amount of, or essentially no, gels). The FAR of the single pass film product mentioned above is generally in the range of about minus 50 to about minus 10/0. For commercial acceptability, the FAR should be plus 20 or better.

Three suggestions have been made for improvement of the FAR, i.e., removal of the fraction containing the larger resin particles so as to remove the suspected source of the large gels; making the components of the resin particle more similar to facilitate their mixing within the resin particle; and the use of longer residence times in the extruder to achieve more efficient mixing of the resin particles. Unexpectedly, removal of the larger resin particles was found to increase the size and number of gels in the film; the use of similar components improved the FAR, but did not provide the desired increase in the end-use properties of the resin; and the longer residence time in the extruder proved to be logistically unacceptable and prohibitively expensive.

### Disclosure of the Invention

An object of this invention, therefore, is to provide an in situ resin blend, which, can be extruded into a film having a commercially acceptable FAR as well as desirable end-use properties without the need for excessive extruder residence times. Other objects and advantages will become apparent hereinafter.

According to the present invention such an in situ resin blend has been discovered. Such a blend is one formed in the gas phase in two or more reactors connected in series comprising a mixture of two types of particles of polyethylene, (i) one type of particle containing a major proportion of high molecular weight polyethylene and a minor proportion of low molecular weight polyethylene and having a relatively high split ratio and (ii) one type of particle containing a major proportion of low molecular weight polyethylene and a minor proportion of high molecular weight polyethylene and having a relatively low split ratio, said proportions being by weight, wherein the average particle size in the blend is at least about 300 microns; the average split ratio of the blend is in the range of about 40:60 to about 60:40; and no more than about 10 percent by weight of the particles in the blend have a split ratio below 90 percent of the average split ratio of the blend.

### Description of the Preferred Embodiment(s)

In the staged reactor process described in this specification, the in situ blend, as removed from the last reactor in the series , which is preferably the second reactor, i.e., the initially prepared blend, is comprised of a mixture of two types of particles of polyethylene. One type of particle contains a major proportion of high molecular weight polyethylene and a minor proportion of low molecular weight polyethylene and has a relatively high split ratio. The other type of particle contains a major proportion of low molecular weight polyethylene and a minor proportion of high molecular weight polyethylene and has a relatively low split ratio. In order to achieve a commercially acceptable FAR, it was unexpectedly found that the average particle size in the blend had to be at least about 300 microns; the average split ratio of the blend had to be in the range of about 40:60 to about 60:40; and no more than about 10 percent by weight of the particles in the blend could have a split ratio below 90 percent of the average split ratio of the blend. This can be accomplished, for example, by sieving the initial blend in a conventional manner to remove particles with low split ratio from the initial blend.

The particle sizes in the initial blend run the gamut from fines (less than about 250 microns) to large particles, which can be as large as, or larger than, 1500 microns. Large particles are generally considered to be equal to or greater than about 350 microns in size while small particles are generally considered to be less than about 350 microns in size. The "size" refers to the average particle size (APS) of a range of particle sizes. For example, when sieving the initial blend of resin with a series of sieves, the average size of a fraction of resin remaining on the sieve with a given opening is equal to the square root of the product of the opening size of the sieve and the opening size of the sieve above it. The sum of the product of average size of a given fraction of the resin and its weight fraction gives the "weight average particle size" of the resin. This method of determination of the average size of a given particle fraction and the determination of the weight average particle size of the entire collection of particles in the initial blend is well known in the art. The interest here is in having an average particle size of at least about 300 microns , and preferably an average particle size in the range of about 300 to about 1000 microns.

The average split ratio of the initially prepared in situ blend is generally the average weight ratio of the high molecular weight reactor polymer to the low molecular weight reactor polymer. The "average split ratio" of the in situ blend is determined simply from the ratio of the production rate of the reactor producing the high molecular weight resin to the production rate of the reactor producing the low molecular weight resin. This average split ratio of the in situ blend can be in the range of about 30:70 to about 70:30 (in percent or parts by weight). However, it is found that each particle size fraction comprising the in situ blend has its own split ratio, the smaller particles (second type) having lower split ratios and the larger particles (first type) having higher split ratios. The lower split ratios are those below 50:50 and the higher split ratios are those above 50:50. The split ratio of each particle can be in the same range as the average split ratio. The split ratio of a given particle size fraction is determined by measurements of the molecular weight distribution of the resin from the first reactor and the molecular weight distribution of the desired particle fraction from the second reactor resin, i.e., the in situ blend. The molecular weight distribution is determined using Size Exclusion Chromatographic procedures well known in the art. First, the peak molecular weight of the high molecular weight polymer is determined from its molecular weight distribution and then the weight fraction ratio of the high molecular weight fraction in the in situ blend is calculated. This fraction is subtracted from the molecular distribution of the in situ blend to obtain the weight fraction of the low molecular weight polymer in a given size fraction of the blend. This procedure can also be used to determine the average split ratio of the blend.

The blend of the invention is different from the initial blend in that the average split ratio is in the range of about 40:60 to about 60:40 and no more than about 10 percent by weight of the particles have a split ratio smaller than 90 percent of the average split ratio. Preferably, the blend is such that no more than about 5 percent by weight of the particles have a split ratio smaller than 90 percent of the average split ratio.

As noted, there is a high molecular weight fraction (or portion) and a low molecular weight fraction in each particle. In this case, the molecular weight for that fraction is the weight average molecular weight for the fraction. High molecular weight fractions can have molecular weights in the range of about 135,000 to about 445,000 and low molecular weight fractions can have molecular weights in the range of about 15,800 to about 35,000, the difference between the high and low fractions being at least about 100,000.

A major proportion is considered to be greater than 50 percent by weight of a particle, and preferably greater than 60 percent by weight, and a minor proportion is considered to be less than 50 percent by weight of a particle and preferably less than about 40 percent by weight. It will be understood that in some instances a particle can be 100 percent (by weight) high or low molecular weight.

While the blend can be produced in two or more reactors connected in series, it is preferably produced in two reactors connected in series wherein a mixture of resin and solid catalyst precursor is transferred from the first reactor to the second reactor in which another polymer is prepared and blends in situ with the polymer from the first reactor. Where more than two reactors are used, it will be understood that the mixture of resin and active catalyst from the first reactor is transferred from reactor to reactor in the series together with the resin formed in each of the subsequent reactors. Thus, there is a continuous blending.

For the purposes of this specification, the term "reactor" can mean either an independent reactor or a stage within a reactor. Thus, the process can be carried out in two or more independent reactors; in two or more stages within one reactor; or in a combination of reactors and stages, all connected in series. It is preferred, however, to carry out the process of the invention in two independent reactors. Conventional prepolymerization can be effected in the first independent reactor or stage, if desired.

The polymer produced in any of the reactors can be a homopolymer of ethylene or a copolymer of ethylene and at least one alpha-olefin having at least 3 carbon atoms. Preferably, the copolymers of ethylene and at least one alpha-olefin comonomer have 3 to 12 carbon atoms. The alpha-olefins most preferably have 3 to 8 carbon atoms, and can be, for example, propylene, 1-butene, 1-hexene, 4-methyl-1-pentene, or 1-octene. Further, no more than one or two alpha-olefin comonomers per reactor, in addition to ethylene, is suggested. Typically, the blends produced are homopolymer/homopolymer blends, homopolymer/copolymer blends, and copolymer/copolymer blends.

Preferred comonomer combinations with respect to the copolymer/copolymer blends are as follows:

| **high mol wt reactor** | **low mol wt reactor** |
|---|---|
| 1-hexene | 1-hexene |
| 1-butene | 1-hexene |
| 1-butene | 1-butene |
| 1-hexene | 1-butene |

The 1-hexene/1-hexene combination is found to give the best film properties; however, the 1-hexene/1-butene combination is found to provide acceptable properties while still meeting the desired level of extractables. Homopolymer/copolymer blends are also advantageous for certain applications.

It will be understood that the in situ blend can be characterized as a bimodal resin. The properties of bimodal resins are strongly dependent on the proportion of the high molecular weight component, i.e., the low melt index component. For a staged reactor system, the proportion of the high molecular weight component is controlled via the relative production rate in each reactor. The relative production rate in each reactor can, in turn, be controlled by a computer application program, which monitors the production rate in the reactors (measured by heat balance) and then manipulates the ethylene partial pressure in each reactor and catalyst feed rate in order to meet the production rate, the production rate split, and catalyst productivity requirements.

In this specification, the terms "high molecular weight" and "low molecular weight" refer to weight average molecular weight. The weight ratio of high molecular weight reactor polymer to low molecular weight reactor polymer in the final blend can be at least about 8:1, and is preferably at least about 20:1, regardless of the number of reactors used. The difference between the high molecular weight polymer and the low molecular weight polymer, in terms of molecular weight, is, generally, at least about 100,000.

A magnesium/titanium based catalyst system can be used to prepare the in situ resin blend. Such a catalyst system can be exemplified by the catalyst system described in United States patent 4,302,565. The solid particulate precursor can be supported or unsupported. Another catalyst system is one where the solid particulate precursor is formed by spray drying and used in slurry form. Such a catalyst precursor, for example, contains titanium, magnesium, aluminum halides, an electron donor, and an inert filler. The precursor is then introduced into a hydrocarbon medium such as mineral oil to provide the slurry form. This is described in United States patent 5,290,745.

It will be understood that the precursor is introduced into the first reactor where it comes into contact with the cocatalyst, and is changed from its original precursor form to an active catalyst. Thus, the active catalyst is transferred to subsequent reactors rather than the precursor.

The electron donor, if used in the catalyst precursor, is an organic Lewis base, liquid at temperatures in the range of about 0°C to about 200°C, in which the magnesium and titanium compounds are soluble. The electron donor can be an alkyl ester of an aliphatic or aromatic carboxylic acid, an aliphatic ketone, an aliphatic amine, an aliphatic alcohol, an alkyl or cycloalkyl ether, or mixtures thereof, each electron donor having 2 to 20 carbon atoms. Among these electron donors, the preferred are alkyl and cycloalkyl ethers having 2 to 20 carbon atoms; dialkyl, diaryl, and alkylaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

While an excess of electron donor is used initially to provide the reaction product of titanium compound and electron donor, the reaction product finally contains about 1 to about 20 moles of electron donor per mole of titanium compound and preferably about 1 to about 10 moles of electron donor per mole of titanium compound.

An activator compound is optional, but is often used with any of the titanium based catalyst precursors. Thus, the term "catalyst precursor" is considered to include activated catalyst precursors. The activator can have the formula AlRₐX_{b}H_{c} wherein each X is independently chlorine, bromine, iodine, or OR'; each R and R' is independently a saturated aliphatic hydrocarbon radical having 1 to 14 carbon atoms; b is 0 to 1.5; c is 0 or 1; and a+b+c = 3. Preferred activators include alkylaluminum mono- and dichlorides wherein each alkyl radical has 1 to 6 carbon atoms and the trialkylaluminums. A particularly preferred activator is a mixture of diethylaluminum chloride and tri-n-hexylaluminum. If it is desired to use an activator, about 0.10 to about 10 moles, and preferably about 0.15 to about 2.5 moles, of activator can be used per mole of electron donor. The molar ratio of activator to titanium can be in the range of about 1:1 to about 10:1 and is preferably in the range of about 2:1 to about 5:1.

The cocatalyst, generally a hydrocarbyl aluminum cocatalyst, can be represented by the formula R₃Al or R₂AlX wherein each R is independently alkyl, cycloalkyl, aryl, or hydrogen; at least one R is hydrocarbyl; and two or three R radicals can be joined to form a heterocyclic structure. Each R, which is a hydrocarbyl radical, can have 1 to 20 carbon atoms, and preferably has 1 to 10 carbon atoms. X is a halogen, preferably chlorine, bromine, or iodine. Examples of hydrocarbyl aluminum compounds are as follows:
triisobutylaluminum, tri-n-hexylaluminum, di-isobutyl-aluminum hydride, dihexylaluminum dihydride, di-isobutyl-hexylaluminum, isobutyl dihexylaluminum, trimethyl-aluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, tritolylaluminum, dibutylaluminum chloride, diethylaluminum chloride, and ethylaluminum sesquichloride. The cocatalyst compounds can also serve as activators or modifiers. About 10 to about 400 moles, and preferably about 10 to about 100 moles of cocatalyst, per mole of titanium compound can be used.

In those cases where it is desired to support the precursor, silica is the preferred support. Other suitable supports are inorganic oxides such as aluminum phosphate, alumina, silica/alumina mixtures, and silica modified with reagents capable of reacting with surface silanols, such aluminum compounds exemplified by alkylaluminums and aluminum halides, boron alkyls and halides, dialkyl zincs, and hexamethyldisilazane. A typical support is a solid, particulate, porous material essentially inert to the polymerization. It is used as a dry powder having an average particle size of about 10 to about 250 microns and preferably about 30 to about 100 microns; a surface area of at least 200 square meters per gram and preferably at least about 250 square meters per gram; and a pore size of at least about 100 angstroms and preferably at least about 200 angstroms. Generally, the amount of support used is that which will provide about 0.1 to about 0.5 millimole of titanium per gram of support and preferably about 0.2 to about 0.3 millimole of titanium per gram of support. Impregnation of the above mentioned catalyst precursor into a silica support can be accomplished by mixing the precursor and silica gel in the electron donor solvent or other solvent followed by solvent removal under reduced pressure. When a support is not desired, the catalyst precursor can be used in slurry form.

As mentioned above, the catalyst precursor can be obtained by spray drying. In this option, a solution of the precursor is prepared and slurried with an inert filler. The slurry is then spray dried by methods such as disclosed in United States Patent 5,290,745. Generally, the amount of inert filler used is that which will provide about 0.3 to about 2.5 millimole of titanium per gram of spray-dried precursor. The fillers which are added to the solution prior to spray drying include any organic or inorganic compounds, which are inert to the titanium compound and the final active catalyst, such as silicon dioxide in the form of firmed silica, titanium dioxide, polystyrene, rubber modified polystyrene, magnesium chloride, and calcium carbonate. The fillers can be used individually or in combination. The spray dried precursor is about 10 to about 95 percent by weight filler. Typical Mg/Ti atomic ratios in the spray dried precursor range from about 3:1 to about 10:1. Average particle size of the spray dried precursor can be adjusted by process means during spray-drying, and can be, furthermore, altered by separation techniques after spray-drying. Typical average particle sizes range from about 10 to about 30 microns using standard shaping and sizing techniques.

Where a modifier is used, the modifiers are usually dissolved in an organic solvent such as isopentane and, where a support is used, impregnated into the support following impregnation of the titanium compound or complex, after which the supported catalyst precursor is dried. Modifiers are similar in chemical structure and function to the activators. For variations, see, for example, United States patent 5,106,926, Neither modifiers nor activators have any meaningful effect on the average particle size of the precursor. The activator is preferably added separately neat or as a solution in an inert solvent, such as isopentane, to the polymerization reactor at the same time as the flow of ethylene is initiated.

United States patent 5,106,926 provides another example of a magnesium/titanium based catalyst system comprising:
(a) a solid particulate catalyst precursor having the formula Mg_{d}Ti(OR)ₑX_{f}(ED)_{g} wherein R is an aliphatic or aromatic hydrocarbon radical having 1 to 14 carbon atoms or COR' wherein R' is a aliphatic or aromatic hydrocarbon radical having 1 to 14 carbon atoms; each OR group is the same or different; X is independently chlorine, bromine or iodine; ED is an electron donor; d is 0.5 to 56; e is 0, 1, or 2; f is 2 to 116; and g is 1.5d+2;
(b) at least one modifier having the formula BX₃ or AlR₍₃₋ₑ₎Xₑ wherein each R is alkyl or aryl and is the same or different, and X and e are as defined above for component (a)
   wherein components (a) and (b) are impregnated into an inorganic support; and
(c) a hydrocarbyl aluminum cocatalyst.

The precursor is prepared from a titanium compound, a magnesium compound, and an electron donor. Titanium compounds, which are useful in preparing these precursors, have the formula Ti(OR)ₑXₕ wherein R, X, and e are as defined above for component (a); h is an integer from 1 to 4; and e+h is 3 or 4. Examples of titanium compounds are TiCl₃, TiCl₄, Ti(OC₂H₅) ₂Br₂, Ti(OC₆H₅) Cl₃, Ti(OCOCH₃) Cl₃, and Ti(OCOC₆H₅) Cl₃. The magnesium compounds include magnesium halides such as MgCl₂, MgBr₂, and MgI₂. Anhydrous MgCl₂ is a preferred compound. About 0.5 to 56, and preferably about 1 to 10, moles of the magnesium compounds are used per mole of titanium compounds.

The electron donor, the support, and the cocatalyst are the same as those described above. As noted, the modifier can be similar in chemical structure to the aluminum containing activators. The modifier has the formula BX₃ or AlR₍₃₋ₑ₎Xₑ wherein each R is independently alkyl having 1 to 14 carbon atoms; each X is independently chlorine, bromine, or iodine; and e is 1 or 2. One or more modifiers can be used. Preferred modifiers include alkylaluminum mono- and dichlorides wherein each alkyl radical has 1 to 6 carbon atoms; boron trichloride; and the trialkylaluminums. About 0.1 to about 10 moles, and preferably about 0.2 to about 2.5 moles, of modifier can be used per mole of electron donor. The molar ratio of modifier to titanium can be in the range of about 1:1 to about 10:1 and is preferably in the range of about 2:1 to about 5:1. Since the modifier reacts with the precursor, it becomes part of the precursor; however, it does not affect the average particle size of the precursor to any meaningful extent.

In a typical process, the entire catalyst system, which includes the solid precursor or activated precursor and the cocatalyst, is added to the first reactor. The catalyst is embedded in the copolymer produced in the first reactor, and the mixture is transferred to the second reactor. Insofar as the catalyst system is concerned, only cocatalyst is added to the second reactor from an outside source. Polymerization is conducted substantially in the absence of catalyst poisons such as moisture, oxygen, carbon monoxide, carbon dioxide, and acetylene.

A relatively low melt index (or high molecular weight) polymer can be prepared in the first reactor, and a relatively high melt index (or low molecular weight) polymer can be prepared in the second reactor. This can be referred to as the forward mode. Alternatively, the low molecular weight polymer can be prepared in the first reactor and the high molecular weight polymer can be prepared in the second reactor. This can be referred to as the reverse mode.

The mixture of polymer and an active catalyst is usually transferred from the first reactor to the second reactor via an interconnecting device using nitrogen or second reactor recycle gas as a transfer medium.

In the high molecular weight reactor:

Because of the low values, instead of melt index, flow index is determined and those values are used in this specification. The flow index can be in the range of about 0.01 to about 30 grams per 10 minutes, and is preferably in the range of about 0.2 to about 12 grams per 10 minutes. The molecular weight of this polymer is, generally, in the range of about 135,000 to about 445,000. The density of the polymer can be at least 0.860 gram per cubic centimeter, and is preferably in the range of 0.900 to 0.940 gram per cubic centimeter. The melt flow ratio of the polymer can be in the range of about 20 to about 70, and is preferably about 22 to about 45.

Melt index is determined under ASTM D-1238, Condition E. It is measured at 190°C and 2.16 kilograms and reported as grams per 10 minutes. Flow index is determined under ASTM D-1238, Condition F. It is measured at 190°C and 10 times the weight used in determining the melt index, and reported as grams per 10 minutes. Melt flow ratio is the ratio of flow index to melt index.

In the low molecular weight reactor:

A relatively high melt index (or low molecular weight) polymer is prepared in this reactor. The high melt index can be in the range of about 50 to about 3000 grams per 10 minutes, and is preferably in the range of about 50 to about 1000 grams per 10 minutes. The molecular weight of the high melt index polymer is, generally, in the range of about 15,800 to about 35,000. The density of the polymer prepared in this reactor can be at least 0.900 gram per cubic centimeter, and is preferably in the range of 0.910 to 0.975 gram per cubic centimeter. The melt flow ratio of this polymer can be in the range of about 20 to about 70, and is preferably about 20 to about 45.

The blend or final product, as removed from the second reactor, can have a melt index in the range of about 0.02 to about 3.5 grams per 10 minutes, and preferably has a melt index in the range of about 0.04 to about 2.0 grams per 10 minutes, or a flow index in the range of about 4 to about 165 grams per 10 minutes. The melt flow ratio is at least about 50, and is preferably in the range of about 55 to about 185. The molecular weight of the final product is, generally, in the range of about 90,000 to about 450,000. The density of the blend is at least 0.915 gram per cubic centimeter, and is preferably in the range of 0.916 to 0.960 gram per cubic centimeter.

In carrying out the process of the invention, it is preferred to essentially eliminate fines, which can be accomplished, for example, by sieving the blend in a conventional manner. Fines are generally considered to be particles having a particle size of less than about 200 microns.

As noted above, the blend has a broad molecular weight distribution which can be characterized as bimodal. The broad molecular weight distribution is reflected in an Mw/Mn ratio of about 8 to about 44, preferably about 20 to about 30. Mw is the weight average molecular weight; Mn is the number average molecular weight; and the Mw/Mn ratio can be referred to as the polydispersity index, which is a measure of the breadth of the molecular weight distribution.

In a typical process for the in situ blending of polymers, the magnesium/titanium based catalyst system, ethylene, alpha-olefin, and hydrogen are continuously fed into the first reactor; the polymer/catalyst mixture is continuously transferred from the first reactor to the second reactor; ethylene, alpha-olefin, and hydrogen, as well as cocatalyst are continuously fed to the second reactor. The final product is continuously removed from the second reactor.

In the low melt index, as reflected in flow index ,reactor:

Where it is desired to produce a copolymer, the mole ratio of alpha-olefin to ethylene can be in the range of about 0.01:1 to about 0.4:1, and is preferably in the range of about 0.02:1 to about 0.26:1. The mole ratio of hydrogen (if used) to ethylene can be in the range of about 0.001:1 to about 0.3:1, and is preferably in the range of about 0.017:1 to about 0.18:1. The operating temperature is generally in the range of about 60° C to about 100° C. Preferred operating temperatures vary depending on the density desired, i.e., lower temperatures for lower densities and higher temperatures for higher densities.

In the high melt index reactor:

Where it is desired to produce a copolymer, the mole ratio of alpha-olefin to ethylene can be in the range of about 0.005:1 to about 0.6:1, and is preferably in the range of about 0.01:1 to about 0.42:1. The mole ratio of hydrogen to ethylene can be in the range of about 0.5:1 to about 3:1, and is preferably in the range of about 1.7:1 to about 2.2:1. The operating temperature is generally in the range of about 70° C to about 110° C. As mentioned above, the temperature is preferably varied with the desired density.

The pressure is generally the same in both the first and second reactors. The pressure, i.e., the total pressure in the reactor, can be in the range of about 200 to about 450 psi and is preferably in the range of about 280 to about 350 psig. The ethylene partial pressure in the first reactor and the ethylene partial pressure in the second reactor are set according to the amount of polymer it is desired to produce in each of these reactors, i.e., to achieve the split ratio mentioned above. It is noted that increasing the ethylene partial pressure in the first reactor leads to an increase in ethylene partial pressure in the second reactor. The balance of the total pressure is provided by alpha-olefin other than ethylene and an inert gas such as nitrogen.

The polymerization is preferably carried out in the gas phase in two or more fluidized bed reactors connected in series, but can also be carried out in one or more stirred-tank reactors.

A typical fluidized bed reactor can be described as follows:

The bed is usually made up of the same granular resin that is to be produced in the reactor. Thus, during the course of the polymerization, the bed comprises formed polymer particles, growing polymer particles, and catalyst particles fluidized by polymerization and modifying gaseous components introduced at a flow rate or velocity sufficient to cause the particles to separate and act as a fluid. The fluidizing gas is made up of the initial feed, make-up feed, and cycle (recycle) gas, i.e., comonomers and, if desired, modifiers and/or an inert carrier gas.

The essential parts of the reaction system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate.

A typical fluidized bed reactor is described in United States Patent 4,482,687, and a typical fluidized bed polymerization procedure is described in United States Patent 4,302,565.

The gaseous feed streams of ethylene, other gaseous alpha-olefins, and hydrogen, when used, are preferably fed to the reactor recycle line as well as liquid alpha-olefins and the cocatalyst solution. Optionally, the liquid cocatalyst can be fed directly to the fluidized bed. The partially activated or completely activated catalyst precursor is preferably injected into the fluidized bed as a solid or a mineral oil slurry. In the case of partial activation, activator is added to the reactor. The product composition can be varied by changing the molar ratios of the comonomers introduced into the fluidized bed. The product is continuously discharged in granular or particulate form from the reactor as the bed level builds up with polymerization. The production rate is controlled by adjusting the catalyst feed rate.

The hydrogen:ethylene molar ratio can be adjusted to control average molecular weights. The alpha-olefins (other than ethylene) can be present in a total amount of up to 15 percent by weight of the copolymer and, if used, are preferably included in the copolymer in a total amount of about 1 to about 10 percent by weight based on the weight of the copolymer.

The residence time of the mixture of reactants including gaseous and liquid reactants, catalyst, and resin in each fluidized bed can be in the range of about 1 to about 12 hours and is preferably in the range of about 2 to about 5 hours.

The obtained resin blend can be extruded into film in a conventional extruder adapted for that purpose. Extruders and processes for extrusion are described in United States patents 4,814,135; 4,857,600; 5,076,988; and 5,153,382. Examples of various extruders, which can be used in forming the film are a single screw type such as one modified with a blown film die and air ring and continuous take off equipment, a blown film extruder, and a slot cast extruder. A typical single screw type extruder can be described as one having a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and multiple heating zones from the rear heating zone to the front heating zone, the multiple sections and zones running from upstream to downstream. If it has more than one barrel, the barrels are connected in series. The length to diameter ratio of each barrel is in the range of about 16:1 to about 30:1. The extrusion can take place at temperatures in the range of about 160 to about 270 degrees C, and is preferably carried out at temperatures in the range of about 180 to about 240 degrees C.

Various features mentioned above can also be found in United States Patents 4,684,703; 4,293,673; and 4,354,009.

The advantages of the invention are found in the film prepared from the resin blend in that FAR values of plus 20 or higher are consistently achieved, and in the low fines in the resin blend. Further, desirable end-use properties without the need for excessive extruder residence times are achieved.

Conventional additives, which can be introduced into the blend, are exemplified by antioxidants, ultraviolet absorbers, antistatic agents, pigments, dyes, nucleating agents, fillers, slip agents, fire retardants, plasticizers, processing aids, lubricants, stabilizers, smoke inhibitors, viscosity control agents, and crosslinking agents, catalysts, and boosters, tackifiers, and antiblocking agents. Aside from the fillers, the additives can be present in the blend in amounts of about 0.1 to about 10 parts by weight of additive for each 100 parts by weight of polymer blend. Fillers can be added in amounts up to 200 parts by weight and more for each 100 parts by weight of the blend.

Patents mentioned in this specification are incorporated by reference herein.

The invention is illustrated by the following examples.

### Examples 1 to 4

Resins A, B, C, and D are prepared using the following catalyst precursor:

The impregnated catalyst precursor is prepared as follows: A magnesium chloride/titanium chloride/tetrahydrofuran (THF) mixture is impregnated into a silica support from a solution of THF. The silica is first dried at 600°C to remove water and most of the surface silanols, and chemically treated with triethylaluminum (TEAL) to further passivate the remaining silanols. The dried free flowing impregnated precursor is then used in the polymerization.

Polymerization is initiated in the first stage by continuously feeding one of the above precursors and a cocatalyst (5 percent by weight TEAL in isopentane) into a fluidized bed of polyethylene granules together with the gaseous comonomers and hydrogen. The resulting particles composed of nascent copolymer and dispersed active catalyst are withdrawn from the first stage and transferred to the second stage using either nitrogen or the gas composition of the second stage as a transfer medium. The second stage, on start-up, also contains a fluidized bed of polymer particles. Again, gaseous comonomer and hydrogen are introduced into the second stage where they come into contact with the particles coming from the first stage. Additional cocatalyst is also introduced. The polymer particles containing a mixture of first and second stage components are continuously removed. Variables with respect to polymerization conditions as well as the properties of the initial resin product are set forth in Table I. 1-Hexene is employed as comonomer.

Resin A is made in example 1; Resin B in example 2; Resin C in example 3; and Resin D in example 4.

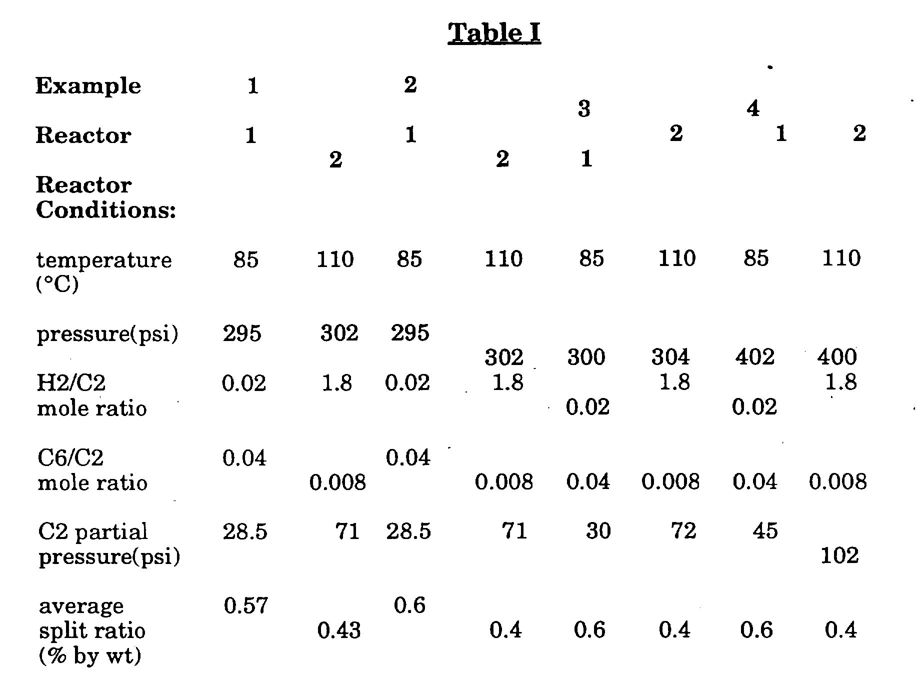

Post-polymerization---examples 1 to 4 are described as follows:

### Examples 1 and 2

Resin A has an APS of 506 microns and a nominal flow index of 7.7. Resin B has an APS of 560 microns and a nominal flow index of 10.7. The particle size distribution of both resins is similar except that Resin B appears to have a slightly higher amount of larger size fractions and this is reflected in its larger APS. In both, the resin fraction above 60 mesh (354 microns) accounts for about 75 percent by weight. The particle size fraction with an APS of 354 microns exhibits close to the nominal flow index. Fractions with an APS of less than 354 microns have a higher flow index and fractions with an APS greater than 354 microns have a lower flow index. Resin B is separated into two fractions using a PortaSifter™ separator, one below 60 mesh (350 microns) and the other above 60 mesh. The above 60 mesh fraction contains less than about 5 percent by weight of the fraction below 350 microns, which has a lower than average split ratio in contrast to about 25 percent by weight in the low split ratio of Resin A. Table II below gives the split ratio for different particle size fractions of Resin A and the plus 60 mesh fraction of Resin B. Resin A (nominal flow index of 7.7) and the plus 60 mesh fraction of Resin B (nominal flow index of 7) are individually compounded with antioxidants using a 65 millimeter single screw compounding extruder and is subsequently fabricated into an about 35 micron film using a 65 millimeter blown film line fitted with a 100 millimeter annular die. Table III gives the results, which demonstrate the improved FAR of the separated resin.

**Table II**

| **size fraction no greater than (microns)** | **Resin A** | | **Resin B** | **(plus 60 mesh)** |
|---|---|---|---|---|
| | **weight percent** | **split ratio** | **weight percent** | **split ratio** |
| 88 | 4.93 | 0.54 | 0.02 | 0.46 |
| 115 | 4.76 | 0.52 | 0.01 | 0.44 |
| 162 | 10.1 | 0.50 | 1.81 | 0.47 |
| 229 | 4.97 | 0.50 | 2.45 | 0.54 |
| 354 | 36.15 | 0.58 | 43.53 | 0.60 |
| 595 | 16.83 | 0.60 | 21.33 | 0.61 |
| 771 | 8.75 | 0.58 | 11.66 | 0.62 |
| 917 | 5.16 | 0.62 | 6.95 | 0.66 |
| 1414 | 8.32 | 0.66 | 12.1 | 0.63 |
| average split ratio | | 0.57 | | 0.60 |
| APS (microns) | 501 | | 561 | |

**Table III**

| **Compounding and Film Fabrication Results** | | |
|---|---|---|
| **Sample** | **Resin A** | **Resin B** |
| compounding rate (pounds per hour) | 64.5 | 66.5 |
| pellet flow index (g/10 min) | 7.1 | 7.4 |
| FAR (35 micron film) | minus 10 | plus 20 |

### Examples 3 and 4

Table IV below gives the weight percent of different particle size fractions and the respective split ratios for Resins C and D.

**Table IV**

| **size fraction no greater than (microns)** | **Resin C** | | **Resin D** | **(plus 60 mesh)** |
|---|---|---|---|---|
| | **weight percent** | **split ratio** | **weight percent** | **split ratio** |
| 88 | 3.23 | 0.36 | 1.69 | 0.45 |
| 115 | 2.62 | 0.42 | 1.38 | 0.48 |
| 162 | 3.74 | 0.44 | 3.53 | 0.50 |
| 229 | 1.59 | 0.42 | 1.63 | 0.51 |
| 354 | 13.25 | 0.52 | 9.88 | 0.56 |
| 595 | 16.3 | 0.55 | 9.81 | 0.60 |
| 771 | 18.71 | 0.56 | 10.62 | 0.61 |
| 917 | 17.7 | 0.57 | 12.01 | 0.63 |
| 1414 | 22.42 | 0.68 | 49.46 | 0.66 |
| average split ratio | | 0.60 | | 0.60 |
| nominal flow index (g/10min) | | 7.1 | | 6.9 |
| APS (microns) | 784 | | 990 | |

Resin C contains approximately 25 percent by weight of particles at or above the average split ratio and the smallest particle size fraction (up to 88 microns) has the lowest split ratio, i.e., 0.36. Resin D contains approximately 80 percent by weight at or above the average split ratio and the smallest particle size fraction (up to 88 microns) has the lowest split ratio, i.e., 0.45. The flow index of Resin C varies from about 3.5 (for the largest size fraction) to about 83 grams (for the smallest size fraction) per 10 minutes. The flow index of Resin D varies from about 4 to about 33 grams per 10 minutes for the same particle size fractions

The resins are pelleted in a 65 millimeter Prodex™ extruder fitted with a pelleting die for compounding with antioxidants and the pellets are extruded on a 65 millimeter Alpine™ blown film extruder fitted with a 100 millimeter spiral die. The melt temperature is 220° C.

**Table V**

| **Resin** | **APS (microns)** | **FAR** | **flow index (grams per 10 minutes)** |
|---|---|---|---|
| C | 784 | minus 30 | 7.1 |
| D | 990 | plus 20/plus 30 | 6.9 |

The examples indicate that Resin D, although it contains approximately 10 percent by weight below the average split ratio, provides a better FAR primarily because most of the resin is above the average split ratio. Further, Resin D has a better compositional uniformity, i.e., a narrower flow index, or split ratio, variation.

Notes to Examples and Tables:
1. Melt Index (g/10 min) is determined under ASTM D-1238, Condition E. It is measured at 190°C and reported as grams per 10 minutes.
2. Flow Index is determined under ASTM D-1238, Condition F. It is measured at 10 times the weight used in the melt index test above. Flow index variation: flow index of sieved fractions from the largest (greater than 10 mesh) to the smallest (less than 140 mesh) .
3. Average split ratio (% by wt): This is the average split ratio for the blend in percent by weight.
4. The polymer particle size are obtained from a Malvern™ 2600 particle size analyzer. Polymer particle size analyses are also obtained from a Rotap™ sieving device.
5. Gel count is the average of two counts, and includes both large and small gels affecting FAR values. The count is the number of gels per 150 square centimeters of film.
6. APS = average particle size in the blend.
7. FAR is the film appearance rating, a rating derived by visual inspection of the film, discussed above.

## Claims

1. An in situ blend formed in the gas phase in two or more reactors connected in series comprising a mixture of two types of particles of polyethylene, (i) one type of particle containing a major proportion of high molecular weight polyethylene and a minor proportion of low molecular weight polyethylene and having a relatively high split ratio and (ii) one type of particle containing a major proportion of low molecular weight polyethylene and a minor proportion of high molecular weight polyethylene and having a relatively low split ratio, said proportions being by weight, wherein the average particle size of the blend is at least about 300 microns; the average split ratio of the blend is in the range of 40:60 to 60:40; and no more than about 10 percent by weight of the particles in the blend have a split ratio below 90 percent of the average split ratio of the blend.

2. An in situ blend as claimed in claim 1 wherein the average particle size of the blend is in the range of from 300 to 1000 microns.

3. An in situ blend as claimed in claim 1 or claim 2 wherein the split ratio of each particle is in the range of 30:70 to 70:30.

4. An in situ blend as claimed in any one of the preceding claims wherein no more than about 5 percent by weight of the particles in the blend have a split ratio below 90 percent of the average split ratio of the blend.

5. An in situ blend as claimed in any one of the preceding claims wherein the high molecular weight fraction of each particle has a molecular weight in the range of from 135,000 to 445,000 and the low molecular weight fraction of each particle has a molecular weight in the range of from 15,800 to 35,000.

6. An in situ blend as claimed in claim 5 wherein a major proportion is at least about 60 percent by weight of the particle and a minor proportion is at least about 40 percent by weight of the particle.

7. An in situ blend as claimed in any one of the preceding claims wherein the blend is formed in two fluidized bed reactors connected in series.

8. An in situ blend formed in the gas phase in two fluidized bed reactors connected in series comprising a mixture of two types of particles of polyethylene, (i) one type of particle containing at least about 60 percent by weight of high molecular weight polyethylene and at least about 40 percent of low molecular weight polyethylene and having a relatively high split ratio and (ii) one type of particle containing at least about 60 percent by weight of low molecular weight polyethylene and at least about 40 percent by weight of high molecular weight polyethylene and having a relatively low split ratio, said proportions being by weight, wherein the high molecular weight fraction of each particle has a molecular weight in the range of from 135,000 to 445,000 and the low molecular weight fraction of each particle has a molecular weight in the range of from 15,800 to 35,000; the average particle size of the blend is at least about 300 microns; the average split ratio of the blend is in the range of from 30:70 to 70:30; and no more than about 5 percent by weight of the particles in the blend have a split ratio below 90 percent of the average split ratio of the blend.
